# EUROPEAN PATENT SPECIFICATION

(11) **EP 1 847 024 B1**
(45) Date of publication and mention of the grant of the patent: **12.10.2011**
(21) Application number: 06719152.8
(22) Date of filing: 23.01.2006
(51) Int. Cl.: H04H 60/33, H04W 88/02

(54) **TRANSMITTER CONTROLLED COMMUNICATION LINKS**
SENDERGESTEUERTE KOMMUNIKATIONSSTRECKEN
LIAISONS DE COMMUNICATION COMMANDEES PAR UN EMETTEUR

(30) Priority: 21.01.2005 US 645021 P; 20.01.2006 US 336362; 20.01.2006 US 336361
(43) Date of publication of application: 24.10.2007
(60) Divisional application: 11005410.3
(73) Proprietor: RESPONSIVE INNOVATIONS, LLC, Akro OH 44319 (US)
(72) Inventor: ADKINS, Kevin, G., Akron, Ohio 44319 (US)
(74) Representative: Kador & Partner
(86) International application number: PCT/US2006/002191
(87) International publication number: WO 2006/078990

(56) References cited:
- EP-A- 1 427 228
- WO-A-2004/017662
- US-A1- 2003 153 321
- US-A1- 2003 215 780
- US-A1- 2003 215 780
- US-B1- 6 665 000
- US-B1- 6 784 748

## Description

### FIELD OF INVENTION

The present application relates to an audience response system and method. More particularly, the present application relates to an audience response system having a plurality of transmitters and at least one receiver and a method for using the same.

### BACKGROUND

Audience response systems are employed to retrieve (or receive) responses from a group of individuals at a central location. Such systems may be used in classroom settings, corporate meetings, or in other gatherings of individuals. Wireless audience response systems may include at least one base unit and a plurality of handheld units. Each handheld unit typically includes a keypad for inputting user responses.

In one known embodiment, the base unit controls communication by, for example, polling each handheld unit. If a user has entered a response into the keypad, the response is transmitted to the base unit when the handheld unit is polled. After receipt of the response, the base unit may send an acknowledgment signal.

US 2003/0215780 A1 relates to a audience response system comprising a central communication unit and plurality of remote response units. The central communication unit initiates communication by transmitting a voting command signal.

A participant response system and method comprising a base station and a plurality of handsets for allowing a participant of an event to input a response is disclosed in WO 2004/017662 A2. The base station initiates communication with the handsets.

### BRIEF DESCRIPTION OF DRAWING

The accompanying drawings, which are incorporated in and constitute a part of the specification, illustrate various example systems, methods, and so on that illustrate various example embodiments of aspects of the invention. It will be appreciated that the illustrated element boundaries (e.g., boxes, groups of boxes, or other shapes in the figures represent one example of the boundaries. One of ordinary skill in the art will appreciate that one element may be designed as multiple elements or that multiple elements may be designed as one element. An element shown as an internal component of another element may be implemented as an external component and vice versa. The drawings may not be to scale and the proportion of certain elements may be exaggerated for the purpose of illustration.

**Figure 1** is a simplified front plan view of one embodiment of a handheld device for an audience response system;

**Figure 2** is a simplified front plan view of one embodiment of a receiver for an audience response system;

**Figure 3** is a simplified schematic drawing of one embodiment of an audience response system including a handheld device in communication with a receiver;

**Figure 4** is a simplified schematic drawing of one embodiment of an audience response system including a receiver in communication with a plurality of handheld device;

**Figure 5** is a simplified flow chart of one embodiment of a method for using a handheld device in an audience response system;

**Figure 6** is a simplified flow chart of one embodiment of a method for using a receiver in an audience response system;

**Figure 7** is a simplified schematic drawing of RF profiles for a handheld device and a receiver in one embodiment of an audience response system; and

**Figure 8** is a simplified illustration of one embodiment of an RF signal spread on a selected frequency band.

### DETAILED DESCRIPTION

This application describes an audience response system according to claim 1, a method of wirelessly communications data according to claim16 and a method to wirelessly receiving data according to claim 25. The system may include at least one handheld device and a base unit. The system may employ a single handheld device or several thousand handheld devices. The handheld device may be capable of transmitting and receiving information. The handheld device may also be referred to as a transmitter device or a handheld user transceiver.

Similarly, although the base unit is referred to as a "receiver," it may be capable of both transmitting and receiving information. The base unit may be referred to as a receiver or a central transceiver.

"Address", as used herein, includes but is not limited to one or more network accessible addresses, device identifiers, electronic identification numbers (such as EINs), IP addresses, url and ftp locations, e-mail addresses, names, a distribution list including one or more addresses, network drive locations, account numbers or other types of addresses that can identify a desired destination or device.

"Computer-readable medium", as used herein, refers to any medium that participates directly or indirectly in providing signals, instructions and/or data to one or more processors for execution. Such a medium may take many forms, including but not limited to, non-volatile media, volatile media, and transmission media. Non-volatile media may include, for example, optical disks, magnetic disks or so-called "memory sticks." Volatile media may include dynamic memory. Transmission media may include coaxial cables, copper wire, and fiber optic cables. Transmission media can also take the form of acoustic or light waves, such as those generated during radio-wave and infra-red data communications, or take the form of one or more groups of signals. Common forms of computer-readable media include, for example, a floppy disk, a flexible disk, hard disk, magnetic tape, or any other magnetic medium, a CD-ROM, any other, optical medium, punch cards, papertape, any other physical medium with patterns of holes, a RAM, a PROM, an EPROM, a FLASH-EPROM, any other memory chip or cartridge, a carrier wave/pulse, or any other medium from which a computer, a processor or other electronic device can read.

"Logic", as used herein, includes but is not limited to hardware, firmware, software and/or combinations of each to perform a function(s) or an action(s), and/or to cause a function or action from another component. For example, based on a desired application or need, logic may include a software controlled microprocessor, discrete logic such as an application specific integrated circuit (ASIC), a programmed logic device, memory device containing instructions, or the like. Logic may also be fully embodied as software.

"Signal", as used herein, includes but is not limited to one or more electrical or optical signals, analog or digital signals, one or more computer or processor instructions, messages, a bit or bit stream, or other means that can be received, transmitted, and/or detected.

"Software", as used herein, includes but is not limited to one or more computer readable and/or executable instructions that cause a computer or other electronic device to perform functions, actions, and/or behave in a desired manner. The instructions may be embodied in various forms such as routines, algorithms, modules or programs including separate applications or code from dynamically linked libraries. Software may also be implemented in various forms such as a stand-alone program, a function call, a servlet, an applet, instructions stored in a memory, part of an operating system or other type of executable instructions. It will be appreciated by one of ordinary skill in the art that the form of software is dependent on, for example, requirements of a desired application, the environment it runs on, and/or the desires of a designer/programmer or the like.

"User", as used herein, includes but is not limited to one or more persons, software, computers or other devices, or combinations of these.

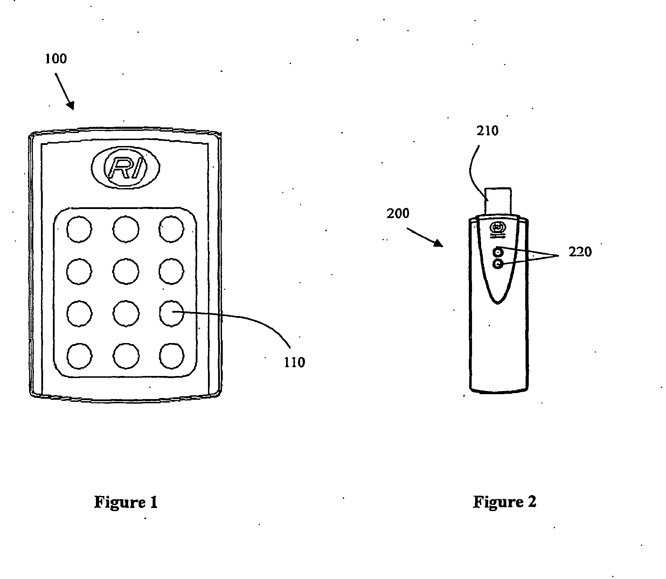

**Figure 1** illustrates a front plan view of one embodiment of a handheld device 100 for an audience response system. In the illustrated embodiment, the handheld device 100 may include a plurality of buttons **110** configured to accept a user input. In alternative embodiments, the handheld device may employ switches, dials, an LCD touch screen, a graphical user interface, or any other known interface configured to accept a user input.

In one embodiment, the handheld device **100** has a length of less than 5 inches, a width of less than 4 inches, and a height of less than 0.75 inches. In an alternative embodiment, the handheld device has a length of 3.3 inches, a width of 2.1 inches, and height of 0.3 inches. In other alternative embodiments, the handheld device may be larger or smaller.

In one embodiment, the handheld device **100** is battery operated. The battery may be a removable battery, such as a AA or AAA size battery or a watch battery. In one embodiment, the handheld device 100 receives operative power from two (2) 3.0V batteries (not shown). Exemplary batteries include, without limitation, CR2032 coin cell lithium batteries, CR2320 coin cell lithium batteries, or CR 1025 coin cell lithium batteries. In one embodiment, the batteries have a diameter of less than 1.25 inches and a height of less than 0.25 inches. In another embodiment, the batteries have a diameter of approximately 0.8 inches and a height of approximately 0.125 inches. When such batteries are used with one of the above described embodiments of the handheld device **100**, the handheld device **100** has a length that is less than 5 times the diameter of one battery, a width that is less than 3 times the diameter of one battery, and a height that is less than 3 times the height of one battery. In one embodiment, two batteries may be stacked, one on top of the other. In another embodiment, the batteries may be placed side by side.

**Figure 2** illustrates a front plan view of one embodiment of a receiver **200** for an audience response system. In the illustrated embodiment, the receiver **200** may include a connector **210** configured to be connected to a USB port of a computer. In alternative embodiments, the receiver may include a connector configured to be connected to a firewire or iLink port, a serial port, or any other known type of computer port In another alternative embodiment, the receiver may wirelessly communicate with a computer via an infrared or RP transmitter. In yet another alternative embodiment, the receiver does not directly connect to a computer.

With continued reference to **Figure 2**, the receiver **200** may include at least one LED **220**. The LED **220** may be configured to indicate on/off status and transmission status. In alternative embodiments, the receiver may employ a dial, an LCD screen, or other known indicators. In another alternative embodiment, the receiver does not include any indicators.

In one embodiment, the receiver **200** has a length of less than 6 inches, a width of less than 2.5 inches, and a height of less than 1 inch. In an alternative embodiment, the receiver 200 has a length of 3.7 inches, a width of 1.1 inches, and a height of 0.4 inches. In other alternative embodiments, the receiver may be larger or smaller.

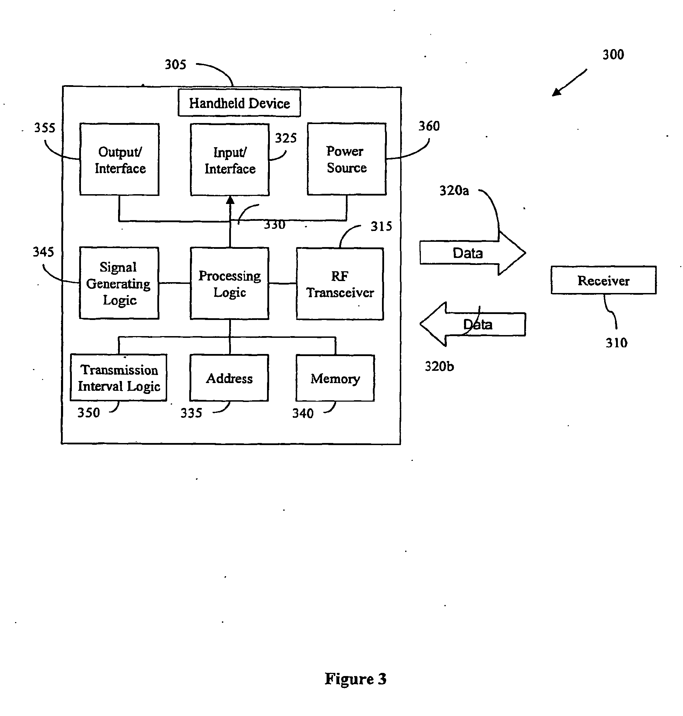

**Figure 3** illustrates one embodiment of an audience response system **300**. In the illustrated embodiment, the system **300** includes at least one handheld device 305 and at least one receiver **310.** The handheld device **305** includes a wireless data transmitter illustrated as a radio frequency (**RF**) transceiver **315** configured to transmit RF signals as shown at **320a** and receive RF signals as shown at **320b**. In one embodiment, the RF transceiver **315** may be configured as model RRRF-01, commercially available from Responsive Innovations, LLC. In an alternative embodiment (not shown), the handheld device may include an RF transmitter, but not a receiver or a transceiver. In another alternative embodiment (not shown), the handheld device may include an infrared (IR) source configured to transmit data and/or an IR sensor configured to receive data.

In one embodiment, the transceiver **315** transmits **RF** signals and receives RF signals on the same frequency or channel, or on the same band of frequencies or channels. In another embodiment, the transceiver **315** transmits RF signals at a first frequency (or first band of frequencies) and receives RF signals at a second frequency (or second band of frequencies).

As shown in **Figure 3**, the handheld device **305** includes an input interface 325. Exemplary input interfaces include a keypad, an LCD touchpad, dials, toggle switches, levers, knobs, buttons, or any other appropriate control or input mechanisms.

In one embodiment, the transceiver **315** may transmit and receive RF transmissions on one of a plurality of different frequencies. The user may select the frequency through the input interface **325**. In this manner, the user may select a frequency that has little or no local RF activity to avoid interference. In one embodiment, the user may select a frequency from 82 different frequencies. In an alternative embodiment, the user may select from more or fewer frequencies.

The input interface **325** is in communication with processing logic **330**. When a user inputs a selection into the input interface **325**, the user selection may be communicated to the processing logic **330**. The processing logic **330** may then generate and format a signal for transmission. In one embodiment, the signal may include a stored address **335**, and the user selection. The address **335** may be a number, a sequence of alphanumeric characters, a sequence of ASCII characters, and the like. In one embodiment, the address **335** is permanently assigned to a handheld device **305** and stored in a computer-readable medium, such as a memory **340**.

In an alternative embodiment. (not shown), an address may be generated upon the occurrence of a predetermined event. For example, the processing logic **330** or other logic may randomly generate an address **335** each time a user inputs a selection or after a predetermined number of selections. In another embodiment, the receiver **310** may assign an address to each handheld device **305**, or the user may enter an identifier.

With continued reference to **Figure 3**, the processing logic **330** is shown to be in communication with signal generating logic **345**. After the processing logic retrieves the address **335**, the processing logic **330** sends the user selection and the address **335** to the signal generating logic **345**. The signal generating logic **345** may generate an RF signal that encodes the user selection and the address. In an alternative embodiment (not shown), the processing logic **330** may perform the step of generating an RF signal.

The processing logic **330** may also be in communication with the RF transceiver **315**. After the RF signal is generated, the processing logic **330** instructs the RF transceiver **315** to transmit the RF signal as shown at **320a**. The RF signal may also be referred to as a wireless selection signal. In one embodiment, the RF signal is transmitted until an acknowledgment signal is received or for a predetermined amount of time.

As illustrated in **Figure 3**, the processing logic **330** may be in communication with a transmission interval logic **350**. The transmission interval logic **350** generates a transmission interval. The transmission interval is an amount of time or clock cycles that elapse between transmission attempts of the RF signal. In one embodiment, the transmission interval is generated on the order of microseconds. In alternative embodiments, the transmission interval is generated on the order of seconds, milliseconds, nanoseconds, picoseconds, femtoseconds, attoseconds, or any other known measurement of time. The transmission interval can be optimized by a number of factors, such as: the number of handheld devices, the number of receivers, the number of users, the frequency of which questions are asked by a moderator, the frequency of the RF signal, the amount of data being transmitted, and the type of data being transmitted.

In one embodiment, the transmission interval logic **350** generates a transmission interval by generating a random number. In another embodiment, the transmission interval is calculated according to a mathematical function. For example, the transmission interval may be calculated by multiplying the address **335** by programmed constant or by a random number. In another embodiment (not shown), the transmission interval may be generated by the processing logic **330**. In yet another alternative embodiment (not shown), a unique transmission interval may be a fixed, predetermined number and stored in memory **340**.

In another alternative embodiment, the time interval may vary with each retransmission of a selection. For example, the time interval may become progressively longer after each retransmission. In one embodiment, the transmission interval may be calculated according to the formula tₙ = r + n(e), where tₙ is the time interval for the n^{th} iteration, r is a random number that is either predetermined or generated with each user selection, n is the number of current iterations, and ε is a small number relative to r. In this embodiment, for example, the transmission interval after the first transmission may, be 5ms, the transmission interval after the first retransmission may be 5ms + 100µs, the transmission interval after the second retransmission may be 5ms + 200µs, etc.

The handheld device **305** transmits the RF signal at a user selected frequency or at a default frequency, according to the transmission interval. In other words, the RF transceiver **315** transmits the RF signal, then pauses for a length of time equal to the transmission interval, then repeats the transmission. This process may be repeated for a predetermined number of transmissions, a predetermined length of time, or until an acknowledgment signal is received. In one embodiment, the process repeats until the first occurrence of: (a) the receipt of an acknowledgment signal or (b) eight (8) seconds elapse after the first RF transmission. In an alternative embodiment, the predetermined length of time may be five (5) seconds. In another alternative embodiment, there is no predetermined length of time for terminating the transmission. In yet another alternative embodiment, the predetermined length of time may be programmable by a user.

The transmission interval may serve several functions. For example, using a transmission interval may conserve power, because sending a transmission intermittently may use less power than sending a continuous transmission. Further, when a single receiver **310** is receiving RF signals from a plurality of handheld devices **305**, the use of different transmission intervals staggers the RF signals, such that they will arrive at the receiver **310** at different times. Additionally, some known transceivers may not be capable of simultaneous or near simultaneous receiving and transmitting of an RF signal. If such a transceiver is employed, the transmission interval allows the RF transceiver **315** to receive an acknowledgement signal at a time when it is not transmitting an RF signal.

With continued reference to **Figure 3**, the handheld device also includes an output interface **355**. In one embodiment, the output interface 355 indicates operating status to a user such as: that a signal is being transmitted, that an acknowledgment has been received, that user entry has been confirmed, and the like. In such an embodiment, one or more LEDs, an LCD, or other display may serve as an output interface **355**.

In one exemplary embodiment (not shown), the handheld device **305** employs a three color LED arrangement selected for the low power requirements of LED technology. In this embodiment, the LED flashes a first color (such as amber) to indicate that the handheld device **305** is transmitting an RF signal. The LED emits a solid (i.e., non-flashing) second color (such as green) to indicate that an acknowledgement signal has been received and the data has been accepted by the receiver **310**. The LED emits a solid third color (such as red) to indicate that no acknowledgement signal has been received and the transmission has been terminated unsuccessfully. In an alternative embodiment, the handheld device **305** may employ a fourth LED display to indicate that an acknowledgment signal is received, but the user selection was not accepted by the receiver **310**.

In another embodiment, the output interface **355** may include an LCD. A first display message indicates that the handheld device **305** is transmitting a signal, a second display message indicates that an acknowledgment has been received, and a third display message indicates that no acknowledgment has been received and the transmission has been terminated. Additionally, the LCD screen may display the user selection along with the transmission status.

In one embodiment, the handheld device **305** includes a power source **360**, such as a battery. The power source **360** may be a removable battery, such as a AA or AAA size battery or a watch battery, which can be replaced when the power runs low.
In one embodiment, the power source **360** includes two (2) 3.0V batteries. Exemplary batteries include, without limitation, CR2032 coin cell lithium batteries, CR2320 coin cell lithium batteries, or CR 1025 coin cell lithium batteries.

In one embodiment, the handheld device **305** can transmit an RF signal when supplied with a current of 10.5mA and can receive an RF signal when supplied with a current of 19A. In other embodiments, the handheld device can transmit an RF signal when supplied with a current of less than 15mA and can receive an RF signal when supplied with a current of less than 25mA.

Alternatively, the power source **360** may be more permanently fixed within the handheld device **305** and the handheld device 305 may be plugged into an external power source to recharge the power source **360**. In another embodiment (not shown), the handheld device may alternatively be configured to be plugged into an external power source or employ photovoltaic panels.

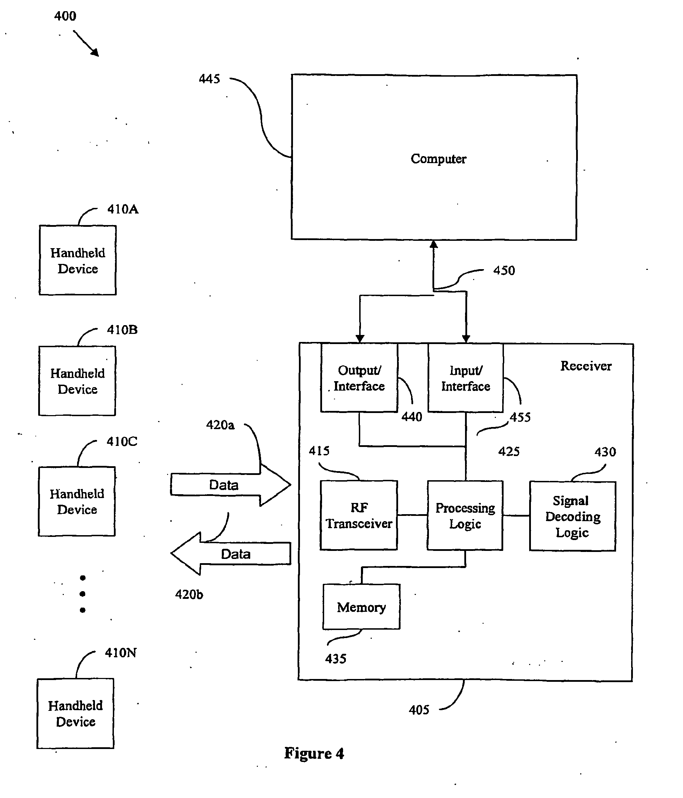

**Figure 4** illustrates a simplified schematic drawing of one embodiment of an audience response system **400**, having a receiver **405** in communication with a plurality of handheld devices **410A-N**. The handheld devices **410A-N** may be substantially similar to the handheld device **305** illustrated in **Figure 3**. It should be understood that the receiver **405** may be in data communication with a single handheld device or many handheld devices.

As shown in **Figure 4**, the receiver **405** includes an RF transceiver **415** configured to receive an RF signal as shown at **420a** and send an RF signal as shown at **420b**. In an alternative embodiment (not shown), the receiver may include an RF receiver, but not a transmitter or a transceiver. In another alternative embodiment (not shown), the receiver may include an infrared (IR) sensor configured to receive data and/or an IR source configured to transmit data.

The receiver **405** further includes processing logic **425** in data communication with signal decoding logic **430**. In this embodiment, when a signal is received by the RF transceiver, it is communicated to the processing logic **425**. The processing logic may instruct the signal decoding logic **430** to decode and parse the signal. The signal decoding logic **430** decodes the signal and parses the signal into components including a user selection and an address. In an alternative embodiment (not shown), the processing logic **425** may decode and parse the signal.

In one embodiment (not shown), the receiver may have an ID. The processing logic may be configured to only accept signals that contain the receiver ID, thus ensuring that any collected data is not skewed by spurious signals. In one embodiment, a replacement receiver may have the same ID as a first receiver. In such an embodiment, the replacement receiver would accept signals from the handheld devices, without the need for reprogramming the handheld devices. In another embodiment, all manufactured receivers may have the same ID.

After the signal has been successfully decoded and parsed, the processing logic **425** may generate an acknowledgment signal that contains, for example, the address and an acknowledgment indicator. The acknowledgment signal may also include an indication of whether the user selection was accepted. The processing logic **425** may also instruct the RF transceiver **415** to communicate the acknowledgment signal over communication link **420b**.

With continued reference to **Figure 4**, the receiver **405** also includes a computer-readable medium such as a memory **435**, configured, for example, as RAM, EEPROM, or other types of writable memory. In one embodiment, the user selection and/or the address are stored in the memory **435** after the signal has been decoded and parsed by the signal decoding logic **430**. The storing of the user selection and/or the address may occur before, after, or concurrently with the transmission of the acknowledgment signal. In an alternative embodiment (not shown), the receiver does not have a writable memory and the user selection and unique identifier are instead only communicated to an external computer.

As further shown in **Figure 4**, the receiver **405** includes an output interface 440. In the illustrated embodiment the output interface **440** is an interface for a computer **445**. The computer **445** may be a PC, a laptop, a graphing calculator, or any other type of computer. The output interface **440** is in communication with the computer **445** via a hardwire connection **450**. The hardwire connection **450** may connect to a USB port, a serial port, a firewire or iLink port, or any other type of port. Ion an alternative embodiment (not shown), the output interface **440** is in communication with the computer **445** via a wireless connection.

In the illustrated embodiment, the receiver **405** further includes an input interface **455**. In an alternative embodiment (not shown), the receiver includes a single interface for both input and output. The receiver **405** may receive instructions from the computer **445** through the input interface **455**, such as instructions to wipe the memory **435**. In one embodiment, the input interface **455** receives power from the computer **445** through the connection **450**. In an alternative embodiment (not shown), the receiver **405** may include an internal power source, such as a battery or external power means.

In an alternative embodiment (not shown), the receiver is not connected to an external computer. Instead, the output interface **440** is a display, such as an LCD display. In such an embodiment, the user selection and/or the address may be displayed on the output interface **440**. In another alternative embodiment (not shown), the handheld device is not in communication with a computer during the communication of RF signals. Instead, data may be stored in the memory **435** and transferred to a computer **445** at a later time.

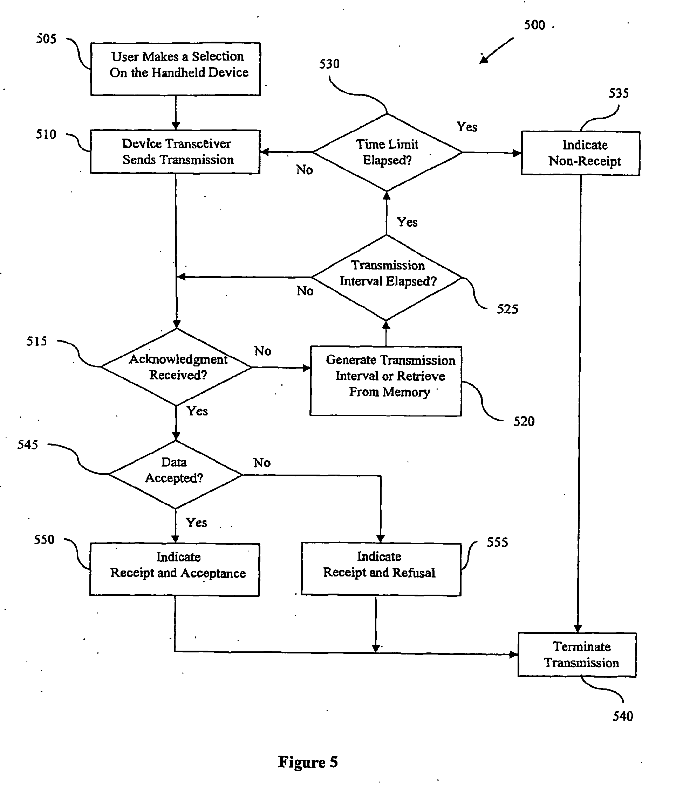

**Figure 5** illustrates a flow chart diagram for an exemplary method **500** for using a handheld device in an audience response system. The user makes a selection, step **505**, by selecting a button, turning a dial, etc. on the handheld device. After the user has made a selection, the handheld device communicates a signal that includes the user selection and an address, step **510**.

The handheld device then waits for an acknowledgment signal, step **515**. If an acknowledgment signal is not received, the handheld device generates or retrieves from memory a transmission interval, step 520, for example, as described above in reference to **Figure 3**. The handheld device then determines whether the transmission interval has elapsed, step **525**. If the transmission interval has not elapsed, the handheld device continues to wait for an acknowledgment signal, step **515**. If the transmission interval has elapses, then the handheld device determines whether a predetermined transmission time limit has elapsed, step **530**. If the predetermined transmission time limit has elapsed, the handheld device indicates that no acknowledgment was received, step **535**, and the handheld device terminates transmission, step **540**. If the predetermined transmission time limit has not elapsed, the handheld device re-transmits the signal, step **510.** The handheld device then waits again for an acknowledgment signal, step **515**.

Once the handheld device receives an acknowledgment signal, step **515**, it determines whether the acknowledgment signal indicates that the data was accepted, step **545**. If the data was accepted, the handheld device indicates receipt and acceptance, step **550**, and terminates transmission, step **540**. If the data was not accepted, the handheld device indicates receipt and non-acceptance, step **555**, and terminates transmission.

In one embodiment, the handheld device transmits an RF signal and receives an acknowledgment RF signal at the same frequency, or on the same frequency band. In another embodiment (not shown), the handheld device transmits an RF signal at a first frequency (or first frequency band) and receives an acknowledgment RF signal at a second frequency (or second frequency band) different from the first frequency (or first frequency band). In such an embodiment, the handheld device may transmit and receive signals concurrently.

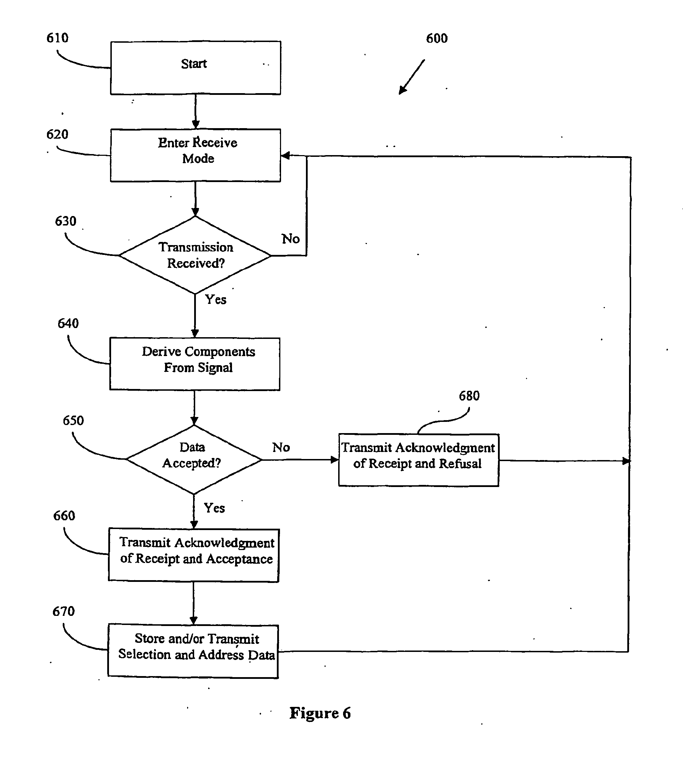

**Figure 6** illustrates a flow chart diagram for an exemplary method **600** for using a receiver in an audience response system. The receiver is first powered on, step **610**, and enters a receive mode, step **620**. In one embodiment, the receiver is powered on merely by plugging it into a USB port of a computer. While the receiver is in receive mode, it waits to receive a signal on a communication link, step **630**. If no signal is received, the receiver remains in receive mode, step **620**. Once a signal is received, the receiver may derive components from the signal such as user selected data or address data, step **640**.

After the data has been derived, the receiver determines whether some or all of the data can be accepted, step **650**. If the data is accepted, the receiver transmits an acknowledgment of receipt and acceptance, step **660**, and the data is stored in the receiver's memory and/or transmitted to an external processor, step **670**. The receiver then returns to receive mode, step **620**. In another embodiment (not shown), step **670** may be performed before or concurrently with step **660**. If the data is determined to be unacceptable, step **650**, the receiver may transmit an acknowledgment of receipt and non-acceptance of data, step **680**. The receiver then returns to receive mode, step **620**.

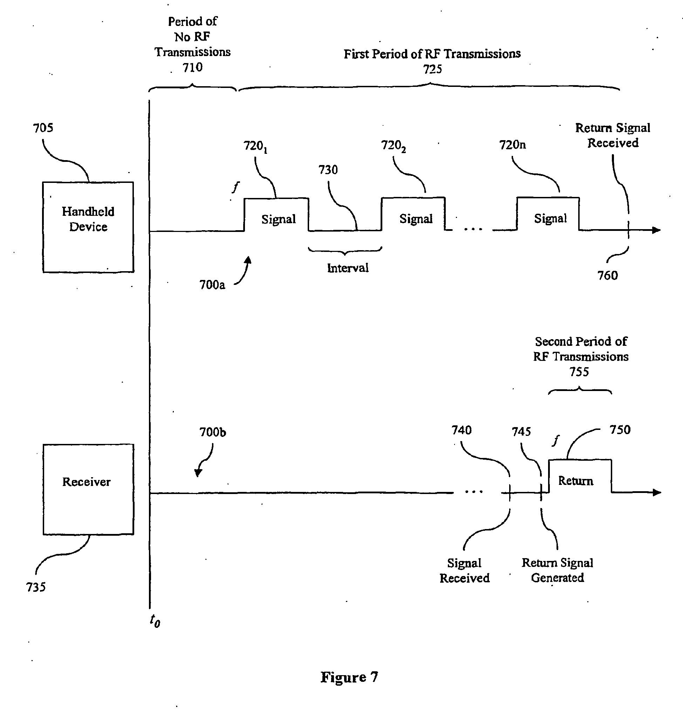

**Figure 7** illustrates a simplified schematic drawing of RF profiles **700a** of a handheld device **705** in one embodiment of an audience response system. In alternative embodiments, a plurality of handheld devices are employed. In the illustrated embodiment, the handheld device **705** makes no transmission until it receives a selection from a user. Thus, in RF profile 700a, there is a distinct period of no RF transmission **710.** Upon a user entering a selection, the handheld device **705** transmits a first RF signal **720₁** at a frequency *f*, thus initiating a first period of RF transmissions **725**. The first RF signal **720₁** includes a user selection and an address, such as a unique address. In one embodiment, the first RF signal **720₁** lasts for a duration of 100µs. The duration is a function of the amount and type of data and the frequency *f*.

After the handheld device **705** transmits the first RF signal **720₁**, the RF profile **700a** includes no RF signals for a period equal to a transmission interval **730**. The transmission interval **730** may be generated or retrieved from memory, for example, as explained above in reference to **Figure 3**. In one embodiment, the transmission interval lasts for a duration of 5ms. After the transmission interval **730**, the RF profile **700a** includes additional RF signals **720₂₋ₙ**. Each RF signals **720₂₋ₙ** is identical to the first RF signal **720₁**, and is followed by a transmission interval **730.** Thus, in one embodiment, during the first period of RF transmissions **710,** there is a transmission frequency of one transmission every 5ms. In another embodiment, the transmission interval **730** is variable. For example, the transmission interval **730** may be 5ms after the first RF signal **720₁**, then 5ms + 100µs after the second RF signal **720₂**, ... and 5ms + ((n-1) * 100)µs after the n^{th} RF signal **720ₙ**.

Figure 7 further illustrates an RF profile **700b** of a receiver **735** in one embodiment of an audience response system. During the first period of RF transmissions described above, the receiver **735** receives one of the RF signals **720₁₋ₙ** transmitted by the handheld device **705**, as shown at **740**. The receiver **735** makes no transmission until it receives an RF signal.

Upon receipt of an RF signal at **740**, the receiver **735** may identify user selection data and address data in the RF signal and determine whether to accept the user selection data. The receiver **735** then generates return data that includes the address data, as shown at **745**. The receiver **735** communicates return data as at least one RF return signal **750** at the frequency *f*, thus initiating a second period of RF transmissions **755** that overlaps with the first period of RF transmissions **710**. In one embodiment, the return signal **750** lasts for a duration of 100µs.

The receiver **735** transmits a predetermined number of return signals **750** then terminates the second period of RF transmissions **755**. In the illustrated embodiment, the receiver **735** transmits a single return signal **750**. In another embodiment (not shown), the receiver transmits multiple return signals, wherein each return signal is followed by a predetermined transmission interval or a randomly generated time interval.

Upon receipt of the return signal **750**, as shown at **760**, the handheld device 705 terminates the first period of RF transmissions **710**. Alternatively, if no return signal is received, the handheld device **705** may automatically terminate the first period of RF transmissions **710** after a predetermined time elapses. In one embodiment, the predetermined time limit is eight (8) seconds. In this embodiment, the first period of RF transmissions **710** has a duration of 100 microseconds to eight (8) seconds.

After the first and second periods of RF transmissions **725,755** are terminated, another distinct period of no RF transmissions follows. In an alternative embodiment (not shown), the handheld device **710** may transmit an RF signal at a first frequency and the receiver **740** may transmit an acknowledgment signal at a second frequency.

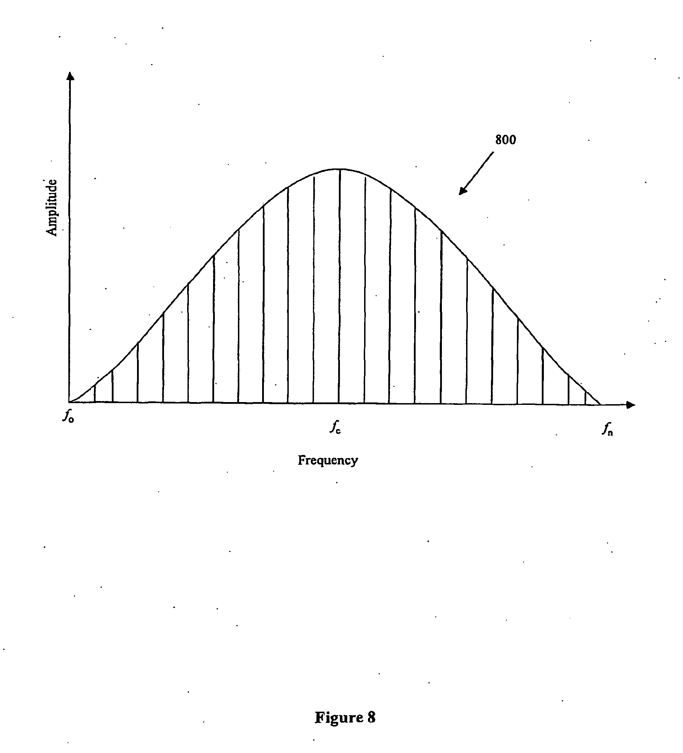

**Figure 8** illustrates one embodiment of an RF signal spread **800** on a selected frequency band. In this embodiment, the RF signals spread **800** covers a range of frequencies from *f*ₒ to *f*ₙ. When a handheld device or a receiver transmits on a selected frequency band, a signal is transmitted that may be centered on a frequency *f*_{c} while spread over *f*ₒ to *f*ₙ. The signal is strongest, and therefore has the highest amplitude, on frequency *f*_{c} at the center of the frequency band. The signal amplitude decreases at frequencies further from *f*ₒ as shown in the illustrated embodiment. Both a handheld device and a receiver may transmit signals over this illustrated RF signal spread, or the handheld device and the receiver may transmit signals centered on different frequencies.

While the present application has been illustrated by the description of embodiments thereof, and while the embodiments have been described in some detail, it is not the intention of the applicants to restrict or in any way limit the scope of the appended claims to such detail. Additional advantages and modifications will readily appear to those skilled in the art Therefore, the application, in its broader aspects, is not limited to the specific details, the representative apparatus, on the illustrative embodiments shown and described.

## Claims

1. An audience response system comprising at least one transmitter device (305) and a receiver unit (405), wherein each transmitter device (305) includes an unique address (335), and logic (330), wherein the logic (330) performs the steps of receiving a user selection via the input interface (325), without receiving a signal from the receiver unit to initiate transmission repeatedly transmitting a wireless selection signal (320a) until a wireless acknowledgment signal (320b) is received, wherein the wireless selection signal (320a) includes the unique address and the user selection,
and wherein the receiver unit (405) includes a receiver (415) for receiving a wireless selection signal and a logic (425) programmed to transmit a wireless acknowledgment signal (320b) in response to the receipt of each wireless selection signal (320a), wherein the receiver makes no transmission until it receives a wireless selection signal.

2. The system of claim 1, wherein the user selection is received via a button push.

3. The system of claim 1, wherein the logic (330) of each transmitter unit (305) is further programmed to generate a transmission interval (730), wherein the wireless selection signal (320a) is repeatedly transmitted according to the transmission interval.

4. The system of claim 3, wherein the logic (330) of each transmitter unit (305) is further programmed to generate a new transmission interval (730) upon receipt of a user selection.

5. The system of claim 3, wherein the transmission interval (730) is a random number.

6. The system of claim 1, wherein the input interface (325) is a keypad.

7. The system of claim 1, wherein the logic (425) of the receiver unit (405) is further programmed to store each user selection.

8. The system of claim 1, wherein the logic (425) of the receiver unit (405) is further programmed to transmit each user selection to an external processor (445).

9. The system of claim 1, wherein the logic (425) of the receiver unit (405) is further programmed to make no transmission until a wireless selection signal (320a) is received from a transmitter unit (305).

10. The system of claim 1, wherein the wireless selection signal (320a) is a radio frequency signal.

11. The system of claim 1, wherein the step of repeatedly transmitting a wireless selection signal (320a) has a duration of 100 microseconds to 8 seconds.

12. The system of claim 1, wherein the wireless acknowledgment signal (320b) has a duration of 100 microseconds.

13. The system of claim 1, wherein each transmitter unit (305) further includes a power source configured to provide no more than 25mA DC current.

14. The system of claim 13, wherein the power source (360) includes at least one battery.

15. The system of claim 13, wherein the power source (360) includes two 3.0 Volt batteries.

16. A method for wirelessly communicating data from a plurality of transmitter units (305) to a receiver (405), the method comprising the steps of:
receiving a user selection at one of the plurality of transmitter units (305);
formatting a wireless selection signal (320a) comprising the unique address of the transmitter unit and the user selection;
without receiving a signal from the receiver unit to initiate transmission asynchronously repeatedly wirelessly transmitting the wireless selection signal;
receiving a wireless acknowledgment signal (320b) comprising the unique address, wherein the receiver makes no transmission until it receives a wireless selection signal;
and terminating the step of asynchronously repeatedly wirelessly transmitting.

17. The method of claim 16, wherein the unique address is a stored address.

18. The method of claim 16, wherein the terminating occurs upon receiving the wireless acknowledgement signal (320b).

19. The method of claim 16, wherein the step of terminating occurs after a predetermined interval.

20. The method of claim 16, further comprising a step of generating a transmission interval.

21. The method of claim 20, wherein the step of asynchronously repeatedly wirelessly transmitting the wireless selection signal (320a) is performed according to the generated transmission interval.

22. The method of claim 16, further comprising a step of transmitting the user selection and unique address to a processor after receipt of the wireless selection signal (320a).

23. The method of claim 16, wherein the wireless selection signal (320a) and the wireless acknowledgment signal (320b) have the same frequency.

24. The method of claim 16, wherein the wireless selection signal (320a) and the wireless acknowledgment signal (320b) have different frequencies.

25. A method for wirelessly receiving data from a plurality of transmitters (305), the method comprising:
powering on the receiver; entering a receive mode;
the transmitter device (305) without receiving a signal from the receiver to initiate transmission repeatedly transmits a wireless selection signal (320a) comprising the unique address of the transmitter device and a user selection;
remaining in the receive mode until a wireless selection signal is received, wherein the receiver makes no transmission until it receives a wireless selection signal (320a);
upon receiving the wireless selection signal, parsing the wireless selection signal into address data and selection data;
generating a wireless acknowledgment signal (320b) including acknowledgment data and the address data and
transmitting the wireless acknowledgment signal (320b).

26. The method of claim 25, further comprising repeating the steps of:
entering a receive mode;
remaining in the receive mode until a wireless selection signal (320a) is received;
upon receiving the wireless selection signal, parsing the wireless selection signal into address data and selection data;
generating an wireless acknowledgment signal (320b) including acknowledgment data and the address data; and
transmitting the wireless acknowledgment signal (320b).

27. The method of claim 25, further comprising storing the selection data.

28. The method of claim 25, further comprising displaying the selection data.

29. The method of claim 25, further comprising transmitting the selection data to an external processor.

## Patentansprüche

1. Zuhörerantwortsystem, das wenigstens eine Sendervorrichtung (305) und eine Empfängereinheit (405) umfasst, wobei jede Sendervorrichtung (305) eine eindeutige Adresse (335) und eine Logik (330) besitzt, wobei die Logik (330) die Schritte des Empfangens einer Anwenderauswahl über die Eingabeschnittstelle (325) ausführt, ohne ein Signal von der Empfängereinheit zu empfangen, um das Senden zu beginnen, um ein drahtloses Auswahlsignal (220a) wiederholt zu senden, bis ein drahtloses Quittierungssignal (320b) empfangen wird, wobei das drahtlose Auswahlsignal (320a) die eindeutige Adresse und die Anwenderauswahl enthält,
und wobei die Empfängereinheit (405) einen Empfänger (415) zum Empfangen eines drahtlosen Auswahlsignals und eine Logik (425), die programmiert ist, um ein drahtloses Quittierungssignal (320a) in Reaktion auf den Empfang jedes drahtlosen Auswahlsignals (320a) zu senden, umfasst, wobei der Empfänger keine Sendung ausführt, bevor er ein drahtloses Auswahlsignal empfängt.

2. System nach Anspruch 1, wobei die Anwenderauswahl über einen Tastendruck empfangen wird.

3. System nach Anspruch 1, wobei die Logik (330) jeder Sendereinheit (305) ferner programmiert ist, um ein Sendeintervall (730) zu erzeugen, wobei das drahtlose Auswahlsignal (320a) in Übereinstimmung mit dem Sendeintervall wiederholt gesendet wird.

4. System nach Anspruch 3, wobei die Logik (330) jeder Sendereinheit (305) ferner programmiert ist, um bei Empfang einer Anwenderauswahl ein neues Sendeintervall (730) zu erzeugen.

5. System nach Anspruch 3, wobei das Sendeintervall (730) eine Zufallszahl ist.

6. System nach Anspruch 1, wobei die Eingabeschnittstelle (325) ein Tastenfeld ist.

7. System nach Anspruch 1, wobei die Logik (425) der Empfängereinheit (405) ferner programmiert ist, um jede Anwenderauswahl zu speichern.

8. System nach Anspruch 1, wobei die Logik (425) der Empfängereinheit (405) ferner programmiert ist, um jede Anwenderauswahl an einen externen Prozessor (445) zu senden.

9. System nach Anspruch 1, wobei die Logik (425) der Empfängereinheit (405) ferner programmiert ist, um keine Sendung auszuführen, bis von einer Sendereinheit (305) ein drahtloses Auswahlsignal (320a) empfangen wird.

10. System nach Anspruch 1, wobei das drahtlose Auswahlsignal (320a) ein Hochfrequenzsignal ist.

11. System nach Anspruch 1, wobei der Schritt des wiederholten Sendens eines drahtlosen Auswahlsignals (320a) eine Dauer von 100 Mikrosekunden bis 8 Sekunden hat.

12. System nach Anspruch 1, wobei das drahtlose Quittierungssignal (320b) eine Dauer von 100 Mikrosekunden hat.

13. System nach Anspruch 1, wobei jede Sendereinheit (305) ferner eine Stromquelle enthält, die konfiguriert ist, um einen Gleichstrom von nicht mehr als 25 mA bereitzustellen.

14. System nach Anspruch 13, wobei die Stromquelle (360) wenigstens eine Batterie enthält.

15. System nach Anspruch 13, wobei die Stromquelle (360) zwei 3,0 Volt-Batterien enthält.

16. Verfahren zum drahtlosen Kommunizieren von Daten von mehreren Sendereinheiten (305) zu einem Empfänger (405), wobei das Verfahren die folgenden Schritte umfasst:
Empfangen einer Anwenderauswahl bei einer der mehreren Sendereinheiten (305);
Formatieren eines drahtlosen Auswahlsignals (320a), das die eindeutige Adresse der Sendereinheit und die Anwenderauswahl enthält;
um ohne Empfang eines Signals von der Empfängereinheit ein Senden zu beginnen, um asynchron wiederholt drahtlos das drahtlose Auswahlsignal zu senden;
Empfangen eines drahtlosen Quittierungssignals (320b), das die eindeutige Adresse enthält, wobei der Empfänger keine Sendung ausführt, bis er ein drahtloses Auswahlsignal empfängt;
und Beenden des Schrittes des asynchronen wiederholten drahtlosen Sendens.

17. Verfahren nach Anspruch 16, wobei die eindeutige Adresse eine gespeicherte Adresse ist.

18. Verfahren nach Anspruch 16, wobei das Beenden erfolgt, wenn das drahtlose Quittierungssignal (320b) empfangen wird.

19. Verfahren nach Anspruch 16, wobei der Schritt des Beendens nach einem vorgegebenen Intervall erfolgt.

20. Verfahren nach Anspruch 16, das ferner einen Schritt des Erzeugens eines Sendeintervalls umfasst.

21. Verfahren nach Anspruch 20, wobei der Schritt des asynchronen wiederholten drahtlosen Sendens des drahtlosen Auswahlsignals (320a) in Übereinstimmung mit dem erzeugten Sendeintervall ausgeführt wird.

22. Verfahren nach Anspruch 16, das ferner einen Schritt des Sendens der Anwenderauswahl und einer eindeutigen Adresse an einen Prozessor nach dem Empfang des drahtlosen Auswahlsignals (320a) umfasst.

23. Verfahren nach Anspruch 16, wobei das drahtlose Auswahlsignal (320a) und das drahtlose Quittierungssignal (320b) die gleiche Frequenz haben.

24. Verfahren nach Anspruch 16, wobei das drahtlose Auswahlsignal (320a) und das drahtlose Quittierungssignal (320b) verschiedene Frequenzen haben.

25. Verfahren zum drahtlosen Empfangen von Daten von mehreren Sendern (305), wobei das Verfahren umfasst:
Einschalten des Empfängers;
Eintreten in eine Empfangsbetriebsart;
wobei die Sendervorrichtung (305), ohne ein Signal von dem Empfänger zu empfangen, das Senden beginnt, um wiederholt ein drahtloses Auswahlsignal (320a), das die eindeutige Adresse der Sendervorrichtung und die Anwenderauswahl enthält, zu senden,
Verbleiben in der Empfangsbetriebsart, bis ein drahtloses Auswahlsignal empfangen wird, wobei der Empfänger keine Sendung ausführt, bis er ein drahtloses Auswahlsignal (320a) empfängt;
bei Empfang des drahtlosen Auswahlsignals Zergliedern des drahtlosen Auswahlsignals in Adressdaten und Auswahldaten; und
Erzeugen eines drahtlosen Quittierungssignals (320b), das Quittierungsdaten und die Adressdaten enthält; und
Senden des drahtlosen Quittierungssignals (320b).

26. Verfahren nach Anspruch 25, das das Wiederholen der folgenden Schritte umfasst:
Eintreten in eine Empfangsbetriebsart;
Verbleiben in der Empfangsbetriebsart, bis ein drahtloses Auswahlsignal (320a) empfangen wird;
bei Empfang des drahtlosen Auswahlsignals Zergliedern des drahtlosen Auswahlsignals in Adressdaten und Auswahldaten;
Erzeugen eines drahtlosen Quittierungssignals (320b), das Quittierungsdaten und die Adressdaten enthält; und
Senden des drahtlosen Quittierungssignals (320b).

27. Verfahren nach Anspruch 25, das ferner das Speichern der Auswahldaten umfasst.

28. Verfahren nach Anspruch 25, das ferner das Anzeigen der Auswahldaten umfasst.

29. Verfahren nach Anspruch 25, das ferner das Senden der Auswahldaten an einen externen Prozessor umfasst.

## Revendications

1. Système de réponse d'audience, comprenant au moins un dispositif d'émission (305) et une unité de réception (405), dans lequel chaque dispositif d'émission (305) comprend une adresse unique (335), et une logique (330), dans laquelle la logique (330) met en oeuvre les étapes consistant à recevoir une sélection d'un l'utilisateur via l'interface d'entrée (325), sans recevoir un signal en provenance de l'unité de réception visant à initier une transmission ; émettre de manière répétée un signal de sélection par voie hertzienne (320a), jusqu'à la réception d'un signal d'accusé de réception par voie hertzienne (320b), dans lequel le signal de sélection par voie hertzienne (320a) comporte l'adresse unique et la sélection de l'utilisateur ; et
dans laquelle l'unité de réception (405) comprend un récepteur (415) pour recevoir un signal de sélection par voie hertzienne, et une logique (425) programmée pour transmettre un signal d'accusé de réception par voie hertzienne (320b) en réponse à la réception de chaque signal de sélection par voie hertzienne (320a), dans lequel le récepteur ne met en oeuvre aucune transmission jusqu'à ce qu'il ait reçu un signal de sélection par voie hertzienne.

2. Système selon la revendication 1, dans lequel la sélection de l'utilisateur est reçue via un bouton poussoir.

3. Système selon la revendication 1, dans lequel la logique (330) de chaque unité d'émission (305) est en outre programmée pour générer un intervalle de transmission (730), dans lequel le signal de sélection par voie hertzienne (320a) est transmis de manière répétée selon l'intervalle de transmission.

4. Système selon la revendication 3, dans lequel la logique (330) de chaque unité d'émission (305) est en outre programmée pour générer un nouvel intervalle de transmission (730) lors de la réception d'une sélection de l'utilisateur.

5. Système selon la revendication 3, dans lequel l'intervalle de transmission (730) est un nombre aléatoire.

6. Système selon la revendication 1, dans lequel l'interface d'entrée (325) est un clavier.

7. Système selon la revendication 1, dans lequel la logique (425) de l'unité de réception (405) est en outre programmée pour stocker chaque sélection de l'utilisateur.

8. Système selon la revendication 1, dans lequel la logique (425) de l'unité de réception (405) est en outre programmée pour transmettre chaque sélection de l'utilisateur à un processeur externe (445).

9. Système selon la revendication 1, dans lequel la logique (425) de l'unité de réception (405) est en outre programmée pour ne mettre en oeuvre aucune transmission jusqu'à la réception d'un signal de sélection par voie hertzienne (320a) par une unité d'émission (305).

10. Système selon la revendication 1, dans lequel le signal de sélection par voie hertzienne (320a) est un signal de fréquence radio.

11. Système selon la revendication 1, dans lequel l'étape consistant à transmettre de manière répétée un signal de sélection par voie hertzienne (320a) présente une durée allant de 100 microsecondes à 8 secondes.

12. Système selon la revendication 1, dans lequel le signal d'accusé de réception par voie hertzienne (320b) présente une durée de 100 microsecondes.

13. Système selon la revendication 1, dans lequel chaque unité d'émission (305) comprend en outre une source d'alimentation configurée pour fournir un courant continu (CC) n'excédant pas 25 mA.

14. Système selon la revendication 13, dans lequel la source d'alimentation (360) comprend au moins une batterie.

15. Système selon la revendication 13, dans lequel la source d'alimentation (360) comprend deux batteries de 3 V.

16. Procédé destiné à communiquer sans fil des données, d'une pluralité d'unités d'émission (305) à un récepteur (405), le procédé comportant les étapes ci-dessous consistant à :
recevoir une sélection d'un utilisateur au niveau de l'une de la pluralité d'unités d'émission (305) ;
formater un signal de sélection par voie hertzienne (320a) comprenant l'unique adresse d'unités d'émission et la sélection de l'utilisateur ;
sans recevoir un signal en provenance de l'unité de réception visant à initier une transmission, transmettre par voie hertzienne, de manière asynchrone et répétée le signal de sélection par voie hertzienne;
recevoir un signal d'accusé de réception par voie hertzienne (320b) comprenant l'adresse unique, dans lequel le récepteur ne met en oeuvre aucune transmission jusqu'à ce qu'il ait reçu un signal de sélection par voie hertzienne ; et
mettre fin à l'étape consistant à transmettre le signal par voie hertzienne, de manière asynchrone et répétée.

17. Procédé selon la revendication 16, dans lequel l'adresse unique est une adresse stockée.

18. Procédé selon la revendication 16, dans lequel l'étape consistant à mettre fin à la transmission est mise en oeuvre lors de la réception du signal d'accusé de réception par voie hertzienne (320b).

19. Procédé selon la revendication 16, dans lequel l'étape consistant à mettre fin à la transmission est mise en oeuvre à l'issue d'un intervalle prédéterminé.

20. Procédé selon la revendication 16, comprenant en outre une étape consistant à générer un intervalle de transmission.

21. Procédé selon la revendication 20, dans lequel l'étape consistant à transmettre sans fil de manière asynchrone et répétée le signal de sélection par voie hertzienne (320a) est mise en oeuvre selon l'intervalle de transmission généré.

22. Procédé selon la revendication 16, comprenant en outre une étape consistant à transmettre la sélection de l'utilisateur et l'adresse unique à un processeur à l'issue de la réception du signal de sélection par voie hertzienne (320a).

23. Procédé selon la revendication 16, dans lequel le signal de sélection par voie hertzienne (320a) et le signal d'accusé de réception par voie hertzienne (320b) présentent la même fréquence.

24. Procédé selon la revendication 16, dans lequel le signal de sélection par voie hertzienne (320a) et le signal d'accusé de réception par voie hertzienne (320b) présentent des fréquences distinctes.

25. Procédé destiné à recevoir par voie hertzienne des données à partir d'une pluralité d'émetteurs (305), le procédé comprenant les étapes ci-dessous consistant à :
mettre le récepteur sous tension ;
entrer en mode de réception ;
dans lequel le dispositif d'émission (305), sans recevoir un signal en provenance du récepteur destiné à initier la transmission, transmet de manière répétée un signal de sélection par voie hertzienne (320a), comportant l'adresse unique du dispositif d'émission et une sélection de l'utilisateur ;
rester dans le mode de réception jusqu'à ce qu'un signal de sélection par voie hertzienne soit reçu, dans lequel le récepteur ne met en oeuvre aucune transmission jusqu'à ce qu'il ait reçu un signal de sélection par voie hertzienne (320a) ;
suite à la réception du signal de sélection par voie hertzienne, répartir le signal de sélection par voie hertzienne en données d'adresse et données de sélection ;
générer un signal d'accusé de réception par voie hertzienne (320b) comportant des données d'accusé de réception et des données d'adresse ; et transmettre le signal d'accusé de réception par voie hertzienne (320b).

26. Procédé selon la revendication 25, comprenant en outre l'étape consistant à répéter les étapes consistant à :
entrer en mode de réception ;
rester dans le mode de réception jusqu'à ce qu'un signal de sélection par voie hertzienne soit reçu ;
suite à la réception du signal de sélection par voie hertzienne, répartir le signal de sélection par voie hertzienne en données d'adresse et données de sélection ;
générer un signal d'accusé de réception par voie hertzienne (320b) comportant des données d'accusé de réception et des données d'adresse ; et
transmettre le signal d'accusé de réception par voie hertzienne (320b).

27. Procédé selon la revendication 25, comprenant en outre l'étape consistant à stocker les données de sélection.

28. Procédé selon la revendication 25, comprenant en outre l'étape consistant à afficher les données de sélection.

29. Procédé selon la revendication 25, comprenant en outre l'étape consistant à transmettre les données de sélection à un processeur externe.
